# EUROPÄISCHE PATENTANMELDUNG

(11) **EP 4 053 537 A1**
(43) Veröffentlichungstag der Anmeldung: **07.09.2022**
(21) Anmeldenummer: 21160019.2
(22) Anmeldetag: 01.03.2021
(51) Int. Cl.: G01N 17/00, G06F 21/35, G07C 9/00

(54) **VERFAHREN UND VORRICHTUNG ZUR TEMPERIERUNG VON PRÜFGUT IN EINER PRÜFKAMMER**

(71) Anmelder: Weiss Umwelttechnik GmbH, 35447 Reiskirchen (DE)
(72) Erfinder: POLITSCHEK, Maximilian, 35423 Lich (DE); GERTLER, Martin, 35764 Sinn (DE); DEMIRKAYA, Ramazan Vedat, 78532 Tuttlingen (DE)
(74) Vertreter: advotec.

(57) **Zusammenfassung**

Die Erfindung betrifft ein Verfahren zur Temperierung von Prüfgut in einer Prüfkammer (10), insbesondere Klimakammer, wobei eine Einstellung einer Lufttemperatur in einem Prüfraum (11) der Prüfkammer (10) mittels einer Steuereinheit (18) der Prüfkammer (10) gesteuert wird, wobei in dem Prüfraum (11) Prüfgut (12) angeordnet und entsprechend einem vorbestimmten Prüfablauf in einem Prüfzeitabschnitt ein Temperaturwechsel im Prüfraum (11) ausgebildet wird, wobei die Prüfkammer (10) mittels einer Tür (22) geöffnet und geschlossen wird. Das Verfahren weist die Schritte auf: Empfangen eines Eingabebefehls und einer Authentifizierungsinformation eines Nutzers der Prüfkammer (10), wobei der Eingabebefehl und/oder die Authentifizierungsinformation kontaktlos erzeugt wird; Authentifizieren des Nutzers auf Basis der Authentifizierungsinformation; und Ausführen des Eingabebefehls.

## Beschreibung

Die Erfindung betrifft ein Verfahren zur Temperierung von Prüfgut in einer Prüfkammer, insbesondere Klimakammer, wobei eine Einstellung einer Lufttemperatur in einem Prüfraum der Prüfkammer mittels einer Steuereinheit der Prüfkammer gesteuert wird, wobei in dem Prüfraum Prüfgut angeordnet und entsprechend einem vorbestimmten Prüfablauf in einem Prüfzeitabschnitt ein Temperaturwechsel im Prüfraum ausgebildet wird, wobei die Prüfkammer mittels einer Tür geöffnet und geschlossen wird.

Ferner betrifft die Erfindung eine Prüfkammer zur Temperierung von Prüfgut, einen Prüfraum zur Aufnahme von Prüfgut, die eine Tür, eine Temperiervorrichtung zur Temperierung des Prüfraums und eine Steuereinheit aufweist. Der Prüfraum ist gegenüber einer Umgebung temperaturgedämmt und mittels der Tür gegenüber der Umgebung verschließbar. Mittels der Temperiervorrichtung eine Temperatur in einem Temperaturbereich von - 20 °C bis +180 °C innerhalb des Prüfraums ausbildbar. Die Temperiervorrichtung weist eine Kühleinrichtung mit einem Kühlkreislauf mit einem Kältemittel, einem Wärmeübertrager, einem Verdichter, einem Kondensator und einem Expansionsorgan auf.

Bei der Temperatur-Klimaprüfung von Prüfgut werden regelmäßig Prüfkammern mit verschließbaren Prüfräumen eingesetzt, in denen zumindest eine Lufttemperatur und auch andere Umgebungsparameter, wie zum Beispiel eine relative Feuchtigkeit, einstellbar sind, um bestimmte klimatische und andere Umgebungsbedingungen simulieren zu können. Das Prüfgut wird dabei innerhalb eines Prüfablaufs bzw. eines Prüfzeitabschnittes der simulierten Umgebungsbedingungen ausgesetzt. Beispielsweise kann ein Prüfablauf auch mehrere Zeitabschnitte mit sukzessiven Temperaturwechseln umfassen. Derartige Prüfabläufe können sich regelmäßig über einen Zeitraum von Stunden oder Tagen erstrecken, sodass eventuelle Veränderungen des Prüfgutes eintreten können, die durch die Prüfbedingungen bedingt sind. Eine Prüfkammer ist zur Überwachung dieser Umgebungsbedingungen mit einer Reihe von Sensoren ausgestattet. Die Prüfkammer werden auch als Umweltsimulationsanlagen bezeichnet, da mittels der einstellbaren Temperaturverläufe und Umgebungsbedingungen innerhalb des Prüfraumes der Prüfkammer verschiedenste Umweltbedingen für das Prüfgut simuliert und eine jeweilige Reaktion des Prüfgutes auf diese simulierten Umgebungsbedingungen geprüft werden können.

Eine Temperierung eines Prüfraums erfolgt über die Temperiervorrichtung und einen durch diese ausgebildeten Umluftkanal innerhalb des Prüfraums. Der Umluftkanal bildet einen Luftbehandlungsraum im Prüfraum aus, in dem Wärmetauscher bzw. Wärmeübertrager zur Erwärmung oder Kühlung der in den Umluftkanal bzw. Prüfraum durchströmenden Luft angeordnet sind. Dabei saugt vorzugsweise ein Lüfter bzw. ein Ventilator die im Prüfraum befindliche Luft an und leitet sie im Umluftkanal zu den jeweiligen Wärmetauschern. Das Prüfgut kann so über die im Prüfraum ausgebildete Lufttemperatur temperiert oder auch einem definierten Temperaturwechsel ausgesetzt werden. Während eines Prüfintervalls kann dann beispielsweise eine Lufttemperatur zwischen einem Temperaturmaximum und einem Temperaturminimum der Prüfkammer wechseln. In dem Prüfraum kann eine Temperatur in einem Temperaturbereich von bis zu -80°C bis +180°C ausgebildet werden, wobei auch eine relative Luftfeuchte innerhalb des Prüfraums mittels Verdichter und Kondensator eingestellt werden kann. Die tatsächlichen klimatisches Bedingungen in dem Prüfraum werden dann mit entsprechenden Sensoren, für beispielsweise Lufttemperatur, Luftgeschwindigkeit und relative Luftfeuchte erfasst, um die gewünschten klimatischen Bedingungen einstellen zu können.

Zur Inbetriebnahme der Prüfkammer ist es zumeist erforderlich, dass sich der Nutzer mit einem Schlüssel anmeldet. Die Anmeldung gibt keinen Hinweis auf eine Identität des Nutzers. Dies geschieht zumeist, indem sich der Nutzer, bspw. mittels eines nutzerspezifischen Passwortes und/oder einer nutzerspezifischen Schlüsselkarte, in die Bediensoftware der Prüfkammer einloggt. Dies verläuft zum Stand der Technik dabei manuell, so dass es dem Nutzer in der dafür aufzuwendenden Zeit nicht möglich ist, eine andere Tätigkeit, wie zum Beispiel die Vorbereitung des Prüfgutes für die bevorstehende Prüfung auszuführen. Je nach Anwendungsfall und prüfungsspezifisch notwendiger Berechtigung (da z. B. bei der Prüfung eines fragilen Prüfgutes eine höhere Berechtigung bzw. bessere Schulung eines Nutzers erforderlich ist), kann es notwendig sein, dass sich während eines Tagesablaufs ein oder mehrere Nutzer an der Prüfkammer durch Eingabe eines individuellen oder gemeinsam genutzten Passworts anmelden. Hierdurch entstehen zusätzliche Totzeiten, in denen die Prüfkammer nicht wirtschaftlich betrieben werden kann.

Nach jeweils erfolgter Anmeldung und vor Beginn eines Prüfvorgangs öffnet der angemeldete Nutzer die Tür der Prüfkammer, legt das zu prüfende Prüfgut in die Prüfkammer ein und schließt darauffolgend die Tür der Prüfkammer wieder, um den Prüfvorgang (zumeist ebenfalls durch einen manuellen Eingabebefehl) zu starten. Während des Prüfvorgangs zur Überwachung oder Inaugenscheinnahme und/oder nachdem der Prüfvorgang beendet ist, öffnet der Nutzer die Tür und entnimmt das Prüfgut aus der Prüfkammer. Dieses Öffnen und Schließen der Tür geschieht zum heutigen Stand der Technik grundsätzlich manuell, wobei die Tür händisch per Griff geöffnet bzw. geschlossen wird. Der Griff kann beispielweise in Form einer Mulde, eines Hebels oder eines herkömmlichen Griffelements ausgebildet sein.

Eine Problematik, die bei der herkömmlichen Art des Öffnens und Schließens der Prüfkammer besteht, ist, dass eine Intensität bzw. Stärke und Geschwindigkeit, mit der die Tür händisch geöffnet bzw. geschlossen wird, in Abhängigkeit von dem jeweiligen Nutzer (bzw. Bediener) der Prüfkammer wesentlich variieren kann. Dadurch kann insbesondere beim Schließen, jedoch auch beim (erneuten) Öffnen der Prüfkammer, eine übermäßige, impulsartige Krafteinwirkung auf die Prüfkammer und ggf. auch auf das darin enthaltene Prüfgut hervorgerufen werden und beispielsweise zu Vibrationen oder Ähnlichem an und innerhalb der Prüfkammer führen. Diese Vibrationen können einen negativen Einfluss auf den Testaufbau innerhalb der Prüfkammer (beispielsweise auf eine hochgenaue Sensoranordnung) und/oder direkt auf das Prüfgut oder die Testergebnisse haben. Zudem ist es nachteilig, dass das händische Öffnen, Schließen und Bestücken der Prüfkammer keine wertschöpfenden Tätigkeiten des Nutzers darstellen und sich somit effizienzmindernd auf die Produktivität der Prüfkammer auswirken.

Beispielsweise kann sich auch das Klima in der Prüfkammer beim Öffnen und Schließen der Prüfkammer negativ auf den Nutzer auswirken. So ist es dem Nutzer beim Öffnen der Türe zum jetzigen Stand der Technik lediglich möglich, einen geringen Abstand (zum Beispiel eine Armlänge) von der Prüfkammer einzuhalten. Dies erscheint insbesondere im Falle einer Innentemperatur von 180°C und einer relativen Feuchtigkeit von 70% gefährlich, da sich der Nutzer unter diesen Bedingungen Verbrennungen zuziehen kann. Der Nutzer wird somit zumindest beim Öffnen und Schließen der Prüfkammer dem darin herrschenden und aus der Prüfkammer entweichenden Klima ausgesetzt.

Als Verbesserung dieser Ist-Situation werden heutzutage teilweise sogenannte Druck-Punkt-Mechaniken für das Öffnen der Tür eingesetzt (engl. Push-Open). Diese Technik ist beispielsweise aus dem Bereich der Kühlschränke und aus dem Maschinen-, Anlagen- und Möbelbau bekannt. Dabei kann durch Ausübung eines mechanischen Druckes auf einer den Türscharnieren abgewandten Türseite ein halbautomatisches Öffnen der Tür in Reaktion auf die Druckausübung herbeigeführt werden. Da dieser Druck grundsätzlich mit einem beliebigen Körperteil ausgeübt werden kann (i.d.R. mit einem Ellenbogen, einem Knie oder einem Fuß des Nutzers), ermöglicht diese Technik dem Nutzer zumindest einen etwas höheren Grad an Freiheit beim Öffnen der Tür gegenüber einem herkömmlichen Türgriff.

Allerdings erfordert auch dieser Lösungsansatz weiterhin die unmittelbare Anwesenheit des Nutzers beim Öffnen und Schließen der Tür. Darüber hinaus bietet diese Technik keine brauchbare Lösung für das Ausführen der Schließbewegung der Tür. Diese muss nämlich weiterhin auf herkömmliche Art und Weise erfolgen, wodurch die damit einhergehenden, oben genannten Probleme, insbesondere die impulsbedingte Vibrationsproblematik, weiterhin bestehen bleiben.

Ebenfalls manuell erfolgt zum Stand der Technik die Einstellung der Prüfparameter für den Prüfvorgang, beispielsweise die Einstellung der Prüftemperatur(en), sowie die Bedienung der Prüfkammer selbst, beispielsweise durch eine manuelle Eingabe zum Starten des Prüfvorgangs. Dabei werden sowohl die Einstellung als auch die Bedienung zumeist unmittelbar an der Prüfkammer, beispielsweise über die Eingabe von Bedienbefehlen über ein an der Prüfkammer vorgesehenes Eingabepanel, durchgeführt. Auf dem Eingabepanel läuft dabei ein Software-Programm zur Bedienung und Einstellung der Prüfkammer ab, das von dem Nutzer über manuelle Eingabe, beispielsweise mittels einer Tastatur, Maus oder per Touch-Funktion, bedient werden muss. Dies erfordert nicht nur die Anwesenheit des Nutzers in unmittelbarer Nähe der Prüfkammer, sondern führt auch dazu, dass der Nutzer in dieser Zeit keine anderen Tätigkeiten, wie zum Beispiel das Beladen der Prüfkammer mit Prüfgut, ausführen kann.

Alternativ kann die Bedienung und Einstellung grundsätzlich auch aus der Ferne erfolgen. Hierbei erfolgt die Bedienung und Einstellung nicht in unmittelbarer Nähe der Prüfkammer, sondern beispielsweise aus der Ferne mittels eines Endgerätes mit Netzwerkanbindung unter Nutzung der entsprechenden Software. Allerdings ist auch hierbei ein manueller Eingriff des Nutzers erforderlich, der eine Anwesenheit erfordert, und den betreffenden Nutzer hindert, eine andere Tätigkeit auszuüben. Zudem kommt er erschwerend hinzu, dass bei der Prüfung von Prüfgut in einigen Branchen, insbesondere bei öffentlichkeitssensiblen Daten, bewusst und aus Sicherheitsgründen von einer Anbindung der Prüfkammer(n) an das Internet abgesehen wird, so dass in solchen Fällen zur remote-Steuerung stets ein speziell einzurichtendes, abzusicherndes und zu wartendes Intranet bereitzustellen ist, was mit nicht unerheblichen Investitions- und Personalkosten einhergeht.

Weil sowohl die Anmeldung, das Öffnen und Schließen als auch die Einstellung und Bedienung eine ortsgebundene Anwesenheit des Nutzers verlangt, resultiert daraus ein weiteres Problem, das sich bei der Handhabung des Prüfgutes niederschlägt. Üblicherweise bringt der Nutzer bzw. Bediener das Prüfgut auf einem Transporthilfsmittel zur Aufnahme von Prüfgütern, wie einem Beistellwagen, zur Prüfkammer oder bereitet das Prüfgut auf einer an die Prüfkammer angrenzenden Arbeitsfläche vor. Insbesondere, wenn es die Dimensionierung des zu prüfenden Prüfgutes erfordert, dieses mit zwei Händen zu handhaben, hat der Nutzer den Nachteil, dass er das Prüfgut zum Anmelden, zum Öffnen und Schließen der Tür sowie zum Vornehmen von Einstellungen an der Prüfkammer, beispielsweise auf dem Beistellwagen oder der Arbeitsfläche, (erneut) ablegen muss. Dies erfordert zum einen ein hohes Maß an Koordination und Vorausplanung des Nutzers bei der Ausführung der verschiedenen Tätigkeiten und erhöht zum anderen die Gefahr, dass das Prüfgut währenddessen beschädigt wird. Darüber hinaus kann die Prüfkammer durch die Handhabung des Prüfgutes lange geöffnet sein, wodurch sich die eingestellten Klimabedingungen durch einen Austausch mit einer Umgebung unerwünscht verändern können.

Zusammengefasst ist eine umfassende Bedienung der Prüfkammer, ohne dass die Anwesenheit und Gebundenheit des Nutzers erforderlich sind, im Stand der Technik nicht möglich. So bleibt zum heutigen Zeitpunkt nur die Möglichkeit, die Steuerung der Prüfkammer mit anderen manuellen Tätigkeiten zu parallelisieren und derart die Effizienz zu steigern.

Nach alldem ist es daher eine Aufgabe der vorliegenden Erfindung, ein Verfahren und eine Prüfkammer zur Temperierung von Prüfgut in einer Prüfkammer derart weiterzuentwickeln, dass die Nachteile des Standes der Technik überwunden werden können, und insbesondere eine Möglichkeit einer Authentifizierung des Nutzers sowie eine effizientere Bedienung der Prüfkammer und eine damit einhergehende verbesserte Wirtschaftlichkeit ermöglicht werden. Zudem soll auch die technische Attraktivität der Prüfkammer, insbesondere für die jüngere Anwendergeneration, gesteigert werden, um somit die Absatzfähigkeit zu verbessern.

Diese Aufgabe wird durch ein Verfahren mit den Merkmalen des Anspruchs 1, und eine Prüfkammer mit den Merkmalen des Anspruchs 14 gelöst.

Das erfindungsgemäße Verfahren betrifft ein Verfahren zur Temperierung von Prüfgut in einer Prüfkammer, insbesondere Klimakammer, wobei eine Einstellung einer Lufttemperatur in einem Prüfraum der Prüfkammer mittels einer Steuereinheit der Prüfkammer gesteuert wird, wobei in dem Prüfraum Prüfgut angeordnet und entsprechend einem vorbestimmten Prüfablauf in einem Prüfzeitabschnitt ein Temperaturwechsel im Prüfraum ausgebildet wird, wobei die Prüfkammer mittels einer Tür geöffnet und geschlossen wird. Dabei wird mittels der Temperiervorrichtung eine Temperatur in einem Temperaturbereich von - 20 °C bis +180 °C, bevorzugt - 60 °C bis +180 °C, besonders bevorzugt - 80 °C bis +180 °C, innerhalb des Prüfraums ausgebildet. Diese Temperaturbereiche können jeweils auch auf bis zu +200 °C, bevorzugt bis +250 °C, besonders bevorzugt bis +300 °C ausgeweitet sein. Das erfindungsgemäße Verfahren ist dadurch gekennzeichnet, dass das Verfahren die Schritte des Empfangens eines Eingabebefehls und einer Authentifizierungsinformation eines Nutzers der Prüfkammer, des Authentifizierens des Nutzers auf Basis der Authentifizierungsinformation, sowie das Ausführen des Eingabebefehls aufweist, wobei der Eingabebefehl und/oder die Authentifizierungsinformation kontaktlos erzeugt wird.

Das erfindungsgemäße Verfahren sowie die erfindungsgemäße Prüfkammer weisen gegenüber dem Stand der Technik eine Vielzahl von Vorteilen auf. Zum einen benötigt der Nutzer nicht seine Hände oder sonstige Gliedmaßen, um den Eingabebefehl und oder die Authentifizierungsinformation zu erzeugen, wenn dieser kontaktlos erzeugt wird bzw. werden. Dies ermöglicht es dem Nutzer einen größeren Abstand von der Prüfkammer einzuhalten, wodurch das oben genannte Verletzungsrisiko durch Inkontakttreten mit den klimatischen Bedingungen der Prüfkammer (Verbrennungen oder Erfrierungen) sowie die Gefahr von Quetschungen oder Ähnlichem vermieden wird. Auch ist es dem Nutzer nun möglich, während der Eingabe bzw. Erzeugung des Eingabebefehls und/ oder der Authentifizierungsinformation andere Tätigkeiten parallel auszuführen, da bei einer kontaktlosen Erzeugung keine unmittelbare Anwesenheit des Nutzers an einem Bedienportal der Prüfkammer oder einem Endgerät (z. B. einem Computer in einem Kontrollraum) mehr notwendig ist. Mit anderen Worten, muss der Nutzer bzw. Bediener nicht mehr zwingend vor dem Gerät stehen, sondern hat gegenüber dem Stand der Technik ein erhöhtes Maß an Bewegungs- und Koordinationsfreiheit. Dies ist beispielsweise besonders vorteilhaft, wenn der Nutzer ein Prüfgut zu der Prüfkammer verbringt, das aufgrund seiner Dimensionierung eine Handhabung mit beiden Händen des Nutzers erfordert. In diesem Fall kann der Nutzer nämlich beispielsweise den Eingabebefehl und die Authentifizierungsinformation auf kontaktlose Art und Weise eingeben, und sich somit vollständig auf die Handhabung des Prüfgutes konzentrieren, ohne dieses wie im Stand der Technik ablegen zu müssen, um einen Eingabebefehl zu erzeugen oder sich zu authentifizieren.

Hierdurch wird die Effizienz und Produktivität des Nutzers und aufgrund der damit einhergehenden Verminderung der Totzeit, in der in der Prüfkammer ansonsten keine Prüfungen stattfinden, auch die der Prüfkammer gesteigert. Dies führt zu einer verbesserten Wirtschaftlichkeit gegenüber dem Stand der Technik. Zudem können Fehleingaben, die bei der herkömmlichen Eingabe eines Eingabebefehls und/oder eines Passwortes zur Anmeldung des Nutzers (wodurch keine Authentifizierung ermöglicht wird), zum Beispiel durch ein Vertippen auf einer Tastatur oder einem (integrierten) Touch-Panel entstanden sind, durch die kontaktlose Erzeugung nunmehr vermieden werden.

Unter der verwendeten und/oder-Kombination ist zu verstehen, dass erfindungsgemäß entweder der Eingabebefehl oder die Authentifizierungsinformation oder sowohl der Eingabebefehl als auch die Authentifizierungsinformation kontaktlos erzeugt wird bzw. werden.

Unter einem Eingabebefehl ist jegliche Art von Eingabesignal zu verstehen, durch das die Prüfkammer beziehungsweise eine Steuereinheit der Prüfkammer beim Ausführen des Eingabebefehls dazu veranlasst wird, zu reagieren, beispielsweise einen oder mehrere Einstellparameter zu ändern.

Unter einer Authentifizierungsinformation des Nutzers ist jegliche Art von Information in Form einer Nutzerinformation zu versehen, durch die sich der Nutzer gegenüber anderen Nutzern unmittelbar und eindeutig abgrenzen kann. Bevorzugt ist die Authentifizierungsinformation jegliche Art von spezifischer Nutzerinformation, die kontaktlos übermittelt werden kann.

Bei dem Prüfgut handelt es sich vorliegend um jegliche Art von Probe (bspw. eines Werkstücks, ein Gerät oder ein sonstiges Produkt, wie z. B. Kleidung, Werkstoffe, Elektronik, Tabletten, etc.), das auf seine Interaktion mit vorbestimmten Umweltbedingungen getestet werden soll.

In einer vorteilhaften Ausführungsform der Erfindung ist das Verfahren ferner dadurch gekennzeichnet, dass bei dem Schritt des Ausführens des Eingabebefehls die Tür der Prüfkammer geöffnet oder geschlossen wird.

In dieser vorteilhaften Ausführungsform wird zumindest der Eingabebefehl kontaktlos erzeugt. Vorzugsweise werden in dieser Ausführungsform sowohl der Eingabebefehl als auch die Authentifizierungsinformation kontaktlos erzeugt. Der Nutzer löst die (vorzugsweise automatische) Öffnung beziehungsweise Schließung der Tür durch den Eingabebefehl aus. Der Eingabebefehl wird beispielsweise von einer Steuereinheit der Prüfkammer ausgeführt, wobei die Steuereinheit in Reaktion auf den Eingabebefehl die Tür veranlasst, sich je nach Informationsinhalt des Eingabebefehls zu öffnen oder zu schließen. Durch die Zusätzliche (vorzugsweise kontaktlos erzeugte) Authentifizierungsinformation wird verhindert, dass die Prüfkammer ungewollt geöffnet oder geschlossen wird, da hierzu nur der authentifizierte Nutzer berechtigt ist.

Ein Vorteil dieser Ausführungsform besteht darin, dass der Nutzer beispielsweise Bestückungsblech und/oder das Prüfgut nicht aus der Hand legen muss, um die Türe zu öffnen, da die Öffnung (und Schließung) nunmehr kontaktlos über den Eingabebefehl erfolgt. Somit kann der Nutzer das Prüfgut oder sonstige Teile in den Händen behalten und parallel dazu oder vorab die Tür über den kontaktlosen Eingabebefehl öffnen. Die doppelte Handhabung der Proben parallel zur Türöffnung ist somit nicht mehr notwendig. Es kann somit vorzugsweise auf Rollwägen oder zusätzliche Arbeitsflächen, auf denen sonst das Prüfgut zwischengelagert werden musste, verzichtet werden. Somit reduziert sich aus Sicht des Betreibers der Prüfkammer der Platzbedarf des gesamten Arbeitssystems.

Darüber hinaus bringt die zumindest halbautomatische, vorzugsweise vollautomatische Türöffnung und/oder -schließung Vorteile hinsichtlich der Prozessstabilität und Gleichmäßigkeit der durchzuführenden Prüfungen in der Prüfkammer, da die Tür stets mit einem ähnlichen, vorzugsweise gleichbleibenden, Anpressdruck geschlossen werden kann. Die Tür wird dadurch gleichmäßiger geöffnet und/oder geschlossen. Somit können nutzerabhängige impulsartige Kraftstöße und damit verbundene Vibrationen, die bei einem zu schnellen oder zu kraftvollen manuellen Öffnen und Schließen der Tür bislang entstehen konnten, nunmehr verhindert werden. Mit anderen Worten ergibt sich durch die fehlende Notwendigkeit einer manuellen Eingabe des Eingabebefehls und das Freibleiben der Hände de facto eine Vermeidung eines unvorsichtigen Öffnens und/oder Schließens durch den Nutzer. Eine negative Beeinflussung der Proben und Prüfung durch Erschütterung oder Vibration wird dadurch vermieden.

Ferner wird insbesondere durch die Öffnung und/oder Schließung der Tür mittels des kontaktlosen Eingabebefehls die oben genannte Verletzungsgefahr durch Temperatureinflüsse als auch die Gefahr mechanischer Verletzungen (z. B. Quetschungen) durch den erhöhten Sicherheitsabstand zu der Prüfkammer reduziert.

Durch die vorteilhafte automatische Öffnung und/oder Schließung der Tür mittels des kontaktlosen Eingabebefehls können neue, effizientere Arbeitsabläufe für den Nutzer der Anlage realisiert werden. Hierdurch wird die Produktivität des Nutzers und der Anlage durch Vermeidung unwirtschaftlicher Totzeiten gesteigert.

Als weiterer Vorteil der Ausführungsform ergibt sich, dass sich durch das Öffnen und/oder Schließen der Tür mittels Eingabebefehls die Dauer, in der die Türe geöffnet ist, reduziert, da die Handhabung des Prüfgutes zuvor oder parallel zum Öffnen der Tür erfolgen kann. Je nach aktuell vorgegebenem Klima in der Umweltsimulationsanlage kann sich dadurch die Erholungszeit der Prüfkammer sowie deren Energieverbrauch (bedingt durch nach dem Öffnen benötigte Kühl- oder Heizleistung) reduzieren.

Darüber hinaus ist die (vorzugsweise vollautomatische) Betätigung der Tür eine Voraussetzung, um Prüfkammern beispielsweise in eine vollautomatisierte Industrie 4.0-Umgebungen einbinden zu können.

Vorzugsweise wird dem Nutzer nach dem Schließen der Tür durch eine Steuereinheit der Prüfkammer ein Signal übermittelt, dass die Tür geschlossen ist. In Antwort auf ein solches Signal ist es bevorzugt, dass der Nutzer beispielsweise durch Erzeugung eines weiteren kontaktlosen Eingabebefehls bestätigt, dass die Tür verriegelt werden soll. In Antwort auf den weiteren Eingabebefehl veranlasst die Steuereinheit die Tür, sich zu verriegeln. So kann ein unbefugter Zugriff zu der Prüfkammer vermieden werden.

Unter einer Tür wird jegliche Art von Vorrichtung verstanden, die dazu ausgebildet ist, eine Öffnung der Prüfkammer, durch die das Prüfgut in den Prüfraum eingebracht wird, zu öffnen und zu schließen. Somit ist unter einer Tür beispielsweise auch jegliche Art von Klappe oder Schiebetor zu verstehen. Die Tür kann ein oder mehrere Scharniere umfassen, jedoch auch scharnierlos, beispielsweise in Form eines Rollladens, ausgeführt sein. Die Tür ist vorzugsweise einstückig ausgebildet, kann jedoch auch zwei oder mehrere Türelemente aufweisen.

In einer weiteren vorteilhaften Ausführungsform der Erfindung ist das Verfahren ferner dadurch gekennzeichnet, dass die Authentifizierungsinformation des Nutzers in dem Eingabebefehl umfasst ist, und der Nutzer auf Basis des Eingabebefehls authentifiziert wird.

In dieser Ausführungsform wird der Eingabebefehl kontaktlos erzeugt.

Dies ergibt, dass auch die Authentifizierungsinformation kontaktlos erzeugt wird, da diese in dieser Ausführungsform in dem Eingabebefehl umfasst ist.

Diese Ausführungsform hat den Vorteil, dass sich der Nutzer lediglich den Eingabebefehl kontaktlos erzeugen muss, und durch diesen auch gleichzeitig die notwendige Authentifizierungsinformation für die Authentifizierung des Nutzers übermittelt beziehungsweise bereitgestellt wird. Somit muss der Nutzer nicht eine von dem Eingabebefehl getrennte Authentifizierungsinformation erzeugen. Die Notwendigkeit für den Nutzer, sich zusätzlich zu authentifizieren, entfällt somit. Hierdurch wird der Aufwand für den Nutzer reduziert, wodurch es zu weiterer Arbeitszeiteinsparung kommt. Die Authentifizierung erfolgt auf Basis des Eingabebefehls, das heißt, auf Basis der in diesem umfassten Authentifizierungsinformation. Die Authentifizierung erfolgt vorzugsweise in Echtzeit, d.h. unmittelbar mit Erzeugung des Eingabebefehls, kann jedoch auch je nach Rechenzeit und Systemeinstellung mit einer zeitlichen Verzögerung erfolgen.

Die Authentifizierungsinformation wird vorzugsweise mit der Erzeugung des (initialen) Eingabebefehls zu einem jeweiligen Prüfablauf bereitgestellt. Somit kann der Nutzer beispielsweise, wenn er das Prüfgut zu der Prüfkammer verbringt, den (initialen) Eingabebefehl zur Öffnung der Tür erzeugen. Durch diesen Eingabebefehl wird der Nutzer dann unmittelbar auch authentifiziert, wodurch der Prüfungsablauf insbesondere in der Startphase beschleunigt wird. Alternativ oder ergänzend kann die Authentifizierungsinformation jedoch auch mit einem beliebigen weiteren Eingabebefehl bereitgestellt werden.

Die Authentifizierungsinformation kann beispielsweise ein Teil des Eingabebefehls sein, aus dem eine Steuereinheit der Prüfkammer die nutzerspezifische Information zur Authentifizierung herleitet. Beispielsweise kann die Authentifizierungsinformation ein bestimmter Teil eines elektrischen und/oder akustischen Signals sein, in Form dessen der Eingabebefehl an die Steuereinheit übermittelt wird.

In einer weiteren vorteilhaften Ausführungsform der Erfindung ist das Verfahren ferner dadurch gekennzeichnet, dass die Authentifizierungsinformation ein nutzerspezifisches Stimmfrequenzprofil aufweist, und das Authentifizieren des Nutzers mittels Spracherkennung des vorbekannten, nutzerspezifischen Stimmfrequenzprofils erfolgt.

Grundsätzlich erlangen Sprachassistenz-Systeme (bzw. Spracherkennungs-Systeme) im privaten und professionellen Bereich immer mehr Bedeutung. So sind Sprachassistenz-Systeme beispielsweise bereits im Automobil, der häuslichen Unterhaltungs- und Bedienelektronik (sog. Smart-Home Technologien) oder auch im Telekommunikationsbereich anzutreffen. Besonders auf dem asiatischen und amerikanischen Markt findet diese Technologie verstärkten Zuspruch und bislang eine stärkere Verwendung als auf dem europäischen Markt. Dies liegt zum einen daran, dass auf den nicht-europäischen Märkten oftmals geringere Datenschutzstandards gelten, zum anderen jedoch auch daran, dass Anwender in diesen Ländern oftmals weniger zurückhaltend auf neue Technologien reagieren. Allerdings ist auch in Europa eine steigende Nutzungstendenz und damit Akzeptanz anhand verschiedener Verkaufszahlen in diesem Sektor zu erkennen.

Ein Vorteil der Verwendung von Spracherkennung als kontaktlose Authentifizierungsmethode bei Prüfkammern ist, dass hierdurch die Bedienung der Prüfkammer erleichtert wird. Zudem wird die Arbeitseffizienz durch den Einsatz von Sprachsteuerung gesteigert. Ferner kann mittels Spracherkennung die Authentifizierung unabhängig vom individuellen Kenntnisstand der Bediensoftware einfach über die Aussprache eines Authentifizierungslautes durch den Nutzer erfolgen. Zudem werden Fehleingaben, die beispielsweise bei der Authentifizierung mittels eines Passwortes entstehen können, reduziert oder gar vermieden. Dies reduziert den erforderlichen Zeitaufwand zur Eingabe. Ebenso erfolgt die Authentifizierung durch Spracherkennung vorzugsweise in Echtzeit, zumindest jedoch im Bereich von unter einer bis wenigen Sekunden. Somit kommt es durch die Authentifizierung nicht mehr zu zeitlichen Verzögerungen, wodurch die Effizienz bei der Benutzung der Prüfkammer verbessert wird. Dies hat eine positive Auswirkung auf die Gesamtproduktivität der Prüfkammer. Zudem kann sich der Nutzer beispielsweise bereits authentifizieren, während er das Prüfgut zu der Prüfkammer verbringt oder es in die Prüfkammer lädt. Hierdurch können zeitliche Synergien genutzt werden, was wiederum produktivitätssteigernd wirkt.

Die Erfinder haben erkannt, dass sich die Integration von Spracherkennung insbesondere für die Authentifizierung des Nutzers für die nachfolgende Nutzung einer Prüfkammer eignet, da hierdurch anders als im Stand der Technik keine manuelle Interaktion des Nutzers erforderlich ist. Zur Authentifizierung spricht der Nutzer beispielsweise seinen Namen aus oder nutzt eine andere Art von vorzugsweise einfach zu merkendem akustischem Erkennungslaut, wie zum Beispiel das Wort "Anmelden".

Die Authentifizierungsinformation ist das durch die Aussprache des Satzes erzeugte akustische Signal, das ein nutzerspezifisches Stimmfrequenzprofil aufweist. Das Stimmfrequenzprofil entspricht vorzugsweise einem akustischen Frequenzband der Stimme des Nutzers, das für jeden Menschen einzigartig ist und es somit ermöglicht, den Nutzer von anderen Nutzern eindeutig zu unterscheiden.

Das nutzerspezifische Stimmfrequenzprofil ist vorzugsweise vorbekannt, wurde also beispielsweise beim erstmaligen Anmelden des Nutzers an der Prüfkammer (beispielsweise durch die Aussprache des Satzes "neuen Nutzer anlegen") erzeugt.

Durch die Spracherkennung wird das nutzerspezifische Stimmfrequenzprofil dem Nutzer zugeordnet. Vorzugsweise erfolgt diese Zuordnung anhand eines Datenbankabgleichs, in der eine Vielzahl von nutzerspezifischen Stimmfrequenzprofilen einer Vielzahl von Nutzern gespeichert sind. Vorzugsweise wird im Fallen eines neuen Nutzers, dessen nutzerspezifisches Stimmfrequenzprofil bei seiner erstmaligen Anmeldung an der Prüfkammer durch die Spracherkennung ermittelt und in der Datenbank abgespeichert.

Vorzugsweise erfolgt die Spracherkennung durch Integration beziehungsweise Anwendung einer bereits vor dem Prioritätstag der Anmeldung verfügbaren Spracherkennungssoftware eines Anbieters (zum Beispiel, Alexa von Amazon, Assistant von Google oder Siri von Apple).

Zudem ist es vorteilhaft, die zur Authentifizierung benutzte Spracherkennungssoftware in einem Online-Betrieb, d. h. durch Verbindung mit dem Internet auszuführen. Hierdurch stehen weitere Online-Dienste sowie Spracherkennungsversionen zur Erkennung einer Vielzahl verschiedener Sprachen zur Verfügung. Insbesondere Letzteres erlaubt eine zuverlässige Authentifizierung auch bei verschiedensprachigen Nutzern und erleichtert somit eine Zusammenarbeit in mehrsprachigen Teams, da sich jeder Nutzer auf seiner Muttersprache authentifizieren kann. Die vorzugsweise Nutzung von Online-Spracherkennung hat mit anderen Worten den Vorteil, dass die Bedienerflexibilität höher ist, da verschiedenste Sprachen verwendet werden können, ohne dass die Einstellungen der Spracherkennung geändert werden müssen. Dies verringert den Aufwand für den Prüfkammerhersteller, da dieser zum einen keine eigene Spracherkennungssoftware entwickeln (lassen) muss und zum anderen keine unterschiedlichen Versionen für unterschiedliche Sprachen zur Verfügung stellen, ausbauen und warten muss.

In einer weiteren vorteilhaften Ausführungsform der Erfindung ist das Verfahren ferner dadurch gekennzeichnet, dass der Eingabebefehl eine Spracheingabe durch den Nutzer aufweist, und der Schritt des Ausführens des Eingabebefehls ferner ein Ermitteln eines Informationsgehaltes des Eingabebefehls mittels Spracherkennung aufweist.

Diese Ausgestaltung hat den Vorteil, dass eine vorzugsweise umfassende Steuerung und Bedienung der Prüfkammer durch Spracheingabe ermöglicht ist. Somit entfällt die Notwendigkeit für den Nutzer, Eingabebefehle, beispielsweise über ein Bedienpanel, händisch einzugeben. Vielmehr wird der Eingabebefehl oder eine Vielzahl von Eingabebefehlen kontaktlos über Spracheingabe des Nutzers erzeugt und durch die Spracherkennung ausgewertet und weiterverarbeitet. Hierdurch reduziert sich der zeitliche Aufwand für die Befehlseingabe. Die Bedienung der Prüfkammer wird somit nicht mehr manuell bzw. händisch durchgeführt, sondern der Nutzer kann sich parallel mit anderen Tätigkeiten befassen und dabei dennoch die Prüfkammer bedienen und/oder steuern und/oder sogar einfache Programmierung vornehmen.

Der Sinngehalt eines jeden erzeugten Eingabebefehls wird durch die Spracherkennung ermittelt. Dies kann beispielsweise dadurch geschehen, dass die von dem Nutzer ausgesprochenen Wörter, Satzteile und/oder Sätze mit einem oder mehreren Schlüsselwörtern in einer online oder offline bereitgestellten Datenbank verglichen werden. Findet sich eines der in der Datenbank umfassten Schlüsselwörter in der Spracheingabe des Nutzers wieder beziehungsweise kann aus dem Sinngehalt abgeleitet werden, kann eine entsprechende Steueranweisung für die Steuerung und/oder Bedienung der Prüfkammer erzeugt werden.

Ferner hat diese Ausführungsform auch noch weitere bereits vorstehend genannte Vorteile und vorteilhafte Ausführungen. So kann beispielsweise die Spracherkennung auch hier durch Integration beziehungsweise Anwendung einer bereits verfügbaren Spracherkennungssoftware samt Vorteilen erfolgen.

In einer weiteren vorteilhaften Ausführungsform der Erfindung ist das Verfahren ferner dadurch gekennzeichnet, dass der Eingabebefehl eine Spracheingabe durch den Nutzer aufweist, dass der Schritt des Ausführens des Eingabebefehls ferner ein Ermitteln eines Informationsgehaltes des Eingabebefehls mittels Spracherkennung aufweist, und dass das Verfahren ferner den Schritt des Einstellens der Lufttemperatur in dem Prüfraum der Prüfkammer auf eine von dem Nutzer vorbestimmte Temperatur auf Basis des ermittelten Informationsgehaltes des Eingabebefehls aufweist. Neben oder anstelle der Lufttemperatur können auch andere Parameter in dem Prüfraum der Prüfkammer derart eingestellt werden.

In dieser vorteilhaften Ausführungsform kann der Nutzer, vorzugsweise neben anderen, mittels Spracheingabe ausführbaren Bedienfunktionen, die Temperatur der Prüfkammer auf einen von dem Nutzer vorbestimmten Wert einstellen. Hierzu spricht der Nutzer beispielsweise lediglich den Satz "Temperatur auf x °C einstellen" aus. In Antwort auf eine solche oder sinnähnliche Spracheingabe wird vorzugsweise eine Temperiervorrichtung der Prüfkammer dazu veranlasst, in dem Prüfraum der Prüfkammer diese Temperatur einzustellen. Es ist auch möglich, dass der Nutzer vorbestimmte zeitliche Temperaturverläufe durch Spracheingabe festlegt. Hierdurch entsteht gegenüber dem Stand der Technik ein enormes zeitliches Einsparpotenzial, da die ansonsten hierzu verwendete Bedien- und/oder Programmierzeit entfällt. So kann vorzugsweise eine nahezu vollautomatische Bedienung der Prüfkammer erfolgen.

Die Spracherkennung kann vorzugsweise ein oder mehrere Schlüsselworte über den Informationsgehalt bzw. Sinngehalt der Spracheingabe des Nutzers ermitteln, um die Spracheingabe beispielsweise von einem "alltäglichen" Dialog mit einem anderen Nutzer abzugrenzen. So können Fehleingaben bei der Befehlseingabe durch Sprachbefehl vermieden werden. Der Nutzer kann sich beispielsweise mit einem Arbeitskollegen über das Wetter des vorherigen Tages unterhalten, ohne dass die Spracherkennung hieraus einen Eingabebefehl zur Einstellung einer Temperatur ermittelt. Dies geschieht beispielsweise erst, wenn der Nutzer die Schlüsselwörter "Temperatur in der Prüfkammer [...] einstellen" in einem einzigen Satz und/oder innerhalb einer vorbestimmten Zeit ausspricht. Es kann auch möglich sein, dass der Nutzer beispielsweise eine eindeutige Kennnummer der Prüfkammer als Schlüsselwort zur Sprachbefehlseingabe aussprechen muss, um so weiter die Fehleranfälligkeit zu reduzieren.

In einer weiteren vorteilhaften Ausführungsform der Erfindung ist das Verfahren ferner dadurch gekennzeichnet, dass das Verfahren ferner den Schritt des Veranlassens des Nutzers, den jeweils ermittelten Informationsgehalt des Eingabebefehls mittels eines Bestätigungsbefehls zu bestätigen aufweist.

Diese Ausführungsform fungiert als weitere Fehlerverminderung. So kann beispielsweise eine fehlerhafte oder ungewollte Spracheingabe durch den Nutzer, die beispielsweise während eines Dialoges mit einem Arbeitskollegen entsteht, vermieden werden, indem der Nutzer in Antwort auf einen jeden Spracheingabebefehl einen weiteren vordefinierten Bestätigungsbefehl aussprechen muss. Der Bestätigungsbefehl kann beispielsweise für jede Prüfkammer individualisiert oder einheitlich unternehmensspezifisch festgelegt werden. Als Bestätigungsbefehl ist beispielsweise auch eine Art Passwort möglich, dass der Nutzer aussprechen muss, um die sprachgesteuerte Bedienung der Prüfkammer zu aktivieren.

In einer weiteren vorteilhaften Ausführungsform der Erfindung ist das Verfahren ferner dadurch gekennzeichnet, dass das Verfahren ferner den Schritt des Ausführens der Spracherkennung in einem Online-Betrieb und/oder einem Offline-Betrieb aufweist.

In dem Online-Betrieb, das heißt, wenn die Spracherkennung mittels einer Anbindung an das Internet ausgeführt wird, können vorzugsweise bereits bekannte Spracherkennungsanbieter wie beispielsweise Google, Amazon und Apple zum Einsatz kommen, wodurch die Kosten einer Eigenentwicklung entfallen. Zudem ist in einem solchen Fall ein deutlich größerer, weltweit erzeugter Datensatz an Sprachdaten verfügbar, so dass auch Sprachakzente, Wortbetonungen und sonstige fehlerhafte Aussprachen und verschiedene Muttersprachen von der Online-Spracherkennung erkannt werden können. Somit können Fehleingabe, oder im Falle einer fehlerhaften Aussprach oder einer Aussprache in einer ortsfremden Sprache gar ein komplettes Ausbleiben der Spracherkennung, vermieden werden. Zudem wird in dem Online-Betrieb weniger betriebsinterne Rechenleistung für die Spracherkennung verlangt, da diese serverbasiert auf den Hostservern der Spracherkennungsanbieter erfolgt.

Hingegen kann in einigen datensensiblen Anwendungsbereichen der Einsatz einer Offline-Sprachsteuerung zur Sprachbefehlseingabe ohne eine Anbindung an das Internet sinnvoll oder gar notwendig sein, da hier vermieden werden soll, dass betriebsinterne, sensible Daten oder (Prüf-) Prozessabläufe über das Internet trotz Schutzvorkehrungen an die Öffentlichkeit gelangen können (zum Beispiel durch eine Cyberattacke). Zudem verlangen einige Bereiche sehr strickte Datenschutzregelungen, die eine Anbindung an das Internet zur Spracherkennung, beispielsweise durch einen Hostserver in dem europäischen Ausland, nicht möglich machen. Daher ist gemäß dieser Ausführungsform für besonders sensible Bereiche, die auf Datenschutzregularien nicht verzichten wollen und können, eine Offline-Variante der Spracherkennung einsetzbar.

In dieser Offline-Variante sind vorzugsweise für die sprachbasierte Authentifizierung die jeweiligen Nutzerprofile in einer verschlüsselten Datenbank auf einem unternehmensinternen Server gespeichert. Bei der Eingabe der Authentifizierungsinformation wird dann das jeweilige Stimmfrequenzprofil mit diesen Datenbankeinträgen verglichen.

Zudem sind in der Datenbank vorzugsweise eine Vielzahl von vordefinierten Spracheingabebefehlen zur sprachbasierten Bedienung der Prüfkammer definiert und vorzugsweise standardisiert. Dies können in nicht abschließender Aufzählung beispielsweise Sprachbefehle, wie" Tür auf", "Tür zu", "Stelle Temperatur auf 10 Grad ein", "Licht an" und/oder "Licht aus" sein. Es ist in der Offline-Variante bevorzugt, dass die vordefinierten Befehle auf die häufigsten Befehle und/oder Abfragen reduziert sind und diese in der Datenbank eingespeichert sind. Somit kann die für die Spracherkennung benötigte Rechenleistung und Erkennungszeit reduziert werden.

Besonders bevorzugt ist es, wenn in dem Verfahren gemäß dieser Ausführungsform, je nach Anwendungsfall und Prüfung, zwischen dem Online-Betrieb, in dem eine umfassende sprachbasierte Authentifizierung und/oder Bedienung der Prüfkammer verfügbar ist, und dem Offline-Betrieb, in dem die sprachbasierte Bedienung und/oder Authentifizierung der Prüfkammer in einem reduzierten Umfang verfügbar ist, gewechselt werden kann. Mit anderen Worten ist ein Wechsel von einer Offline-Sprachsteuerung zu einer Online-Sprachsteuerung oder umgekehrt jederzeit möglich und kann somit bei Bedarf eine höhere Sicherheitsstufe gewährleisten. Dies erlaubt ein hohes Maß an Flexibilität bei dem Einsatz der Prüfkammer.

In einer weiteren vorteilhaften Ausführungsform der Erfindung ist das Verfahren ferner dadurch gekennzeichnet, dass das Verfahren ferner den Schritt des Herausfilterns von Störgeräuschen aus der Umgebung der Prüfkammer, zum Zwecke der Spracherkennung mittels akustischer Filter aufweist.

Ein häufiges Problem, das bei dem Einsatz von Spracherkennung auftritt ist, dass Störgeräusche aus der Umgebung zu Störsignalen in dem Empfänger, beispielsweise einem für die Spracherkennung verwendeten Mikrofon, führen. Hierdurch können beispielsweise Fragmente der Spracheingabe oder die gesamte Spracheingabe fehlerhaft oder nicht erkannt werden. Um diesen negativen Einfluss von Nebengeräuschen zu vermeiden, die zu Problemen bei der Übertragung bzw. Spracherkennung führen, werden gemäß dieser Ausführungsform die Störgeräusche mittels einem oder mehrerer akustischer Filter herausgefiltert, so dass in dem Empfänger vorzugsweise nur noch die Spracheingabe(n) des Nutzers als Eingangssignal ankommen. Zusätzlich oder alternativ kann dem Effekt der negativen Störgeräusche auch dadurch entgegengewirkt werden, dass eine große Datenbasis, bspw. durch eine Online-Spracherkennung, für die Spracherkennung verwendet wird.

In einer weiteren vorteilhaften Ausführungsform der Erfindung ist das Verfahren ferner dadurch gekennzeichnet, dass das Verfahren ferner die Schritte des Erstellens eines Protokolls über zumindest einen Teil der empfangenen Eingabebefehle und/oder Authentifizierungen, und des Speicherns des Protokolls für einen vorbestimmten Zeitraum aufweist.

Ein Vorteil dieser Ausführungsform ist, dass die (zum Beispiel von einer Steuereinheit der Prüfkammer) erfassten Eingabebefehle und/oder Authentifizierungsinformationen somit im Hintergrund protokolliert werden. Insbesondere, wenn Spracherkennung zum Einsatz kommt, können die Eingabebefehle, die Spracheingaben und die darin umfasste Authentifizierungsinformation protokolliert werden. Somit ist zu einem späteren Zeitpunkt jeder Eingabebefehl eindeutig einem Nutzer zuzuordnen.

Dies hat insbesondere in Großbetrieben den Vorteil, da trotz des eines häufigen Wechsels sowie der Vielzahl an Mitarbeitern eindeutig vorvollzogen werden kann, welcher Nutzer welche Bedienung an der Prüfkammer vollzogen hat. Dies kann auch bei der Nachverfolgung von Fehlern bei der Bedienung hilfreich sein, und bietet dem Qualitätsmanagement neue Ansatzpunkte für die Behebung von betriebsinternen Fehlern. Mit anderen Worten lassen sich durch entsprechende Datenlogs in den Protokollen Informationen über den Zugang zu der Prüfkammer im Hintergrund erstellen. Durch die Protokollierung der Authentifizierung ist zudem stets eindeutig nachvollziehbar, welcher Nutzer die Prüfkammer geöffnet und/oder geschlossen hat. Auch ist es vorteilhaft, dass die Prüfkammer weitere interne Informationen und/oder einen jeweiligen Betriebsstatus über entsprechende Kommunikationsschnittstellen melden kann, und diese Informationen in dem Protokoll abgespeichert werden.

Das Protokoll kann in einem einfachsten Fall bspw. in einem Compressed Column Storage- (ccs-) oder einem XML-Format geschrieben werden. Ferner ist bei der Anbindung an das Internet auch ein Erstellen des Protokolls in einem gängigen HTML Format oder Ähnlichem vorteilhaft, da diese Formate die Integration in bereits bestehende Betriebsabläufe durch umfassende Software-Kompatibilität erleichtern.

In einer weiteren vorteilhaften Ausführungsform der Erfindung ist das Verfahren ferner dadurch gekennzeichnet, dass das Verfahren vor dem Schritt des Empfangens ferner den Schritt des Erzeugens des Eingabebefehls und/oder der Authentifizierungsinformation durch eine kontaktlose Interaktion des Nutzers mit einem Sensor aufweist.

In dieser Ausführungsform werden entweder der Eingabebefehl, die Authentifizierungsinformation oder beides durch die kontaktlose Interaktion mit einem Sensor erzeugt.

Beispielsweise kann der Nutzer die Authentifizierungsinformation über einen RFID-Chip erzeugen, auf dem nutzerspezifische Daten gespeichert sind und den der Nutzer bei sich trägt.

Zur Erzeugung der Authentifizierungsinformation ist es auch bevorzugt, wenn eine Gesichtserkennung zum Einsatz kommt, da diese eine eindeutige Zuordnung des Nutzers aufgrund charakteristischer Gesichtszüge ermöglicht. Die Gesichtserkennung zur Authentifizierung erfolgt kontaktlos, bspw. indem der vor der Prüfkammer stehende Nutzer über eine oder mehrere Kameras beobachtet und mittels einer entsprechenden Bildauswertung erkannt wird. Die Gesichtserkennung kann ähnlich wie die Spracherkennung, in einem Online- oder Offline-Betriebe erfolgen.

Zudem ist es möglich, beispielsweise Eingabebefehle, wie das Öffnen oder Schließen der Tür, kontaktlos über die Interaktion mit einem Sensor zu erzeugen. Hierbei können unter Anderem NFC, RFID, Bluetooth-Technologien und/oder die Unterbrechung einer Lichtschranke zum Einsatz kommen. Wenn der Nutzer sich bspw. dem Sensor nähert, wird in Reaktion darauf das Öffnen oder Schließen der Tür veranlasst. Zudem ist es möglich, dass der Nutzer diesen Eingabebefehl nochmals bestätigen muss, um so Fehleingaben zu vermeiden. Diese Bestätigung kann beispielsweise über eine kontaktarme Interaktion mit einem Druck-Punkt-Sensor erfolgen.

Die kontaktreduzierte Erzeugung des Eingabebefehls kann vorzugsweise auch zusätzlich zu einer kontaktlosen Erzeugung des Eingabebefehls als Backup-Lösung vorgesehen sein.

In einer weiteren vorteilhaften Ausführungsform der Erfindung ist das Verfahren ferner dadurch gekennzeichnet, dass der Schritt des Authentifizierens als eine 2-Faktor-Authentifizierung durchgeführt wird.

Je nach Sicherheitsstufe kann es erforderlich sein, die Prüfkammer im Wege einer 2-Wege-Authentifizierung (2-Faktor-Authentifizierung) zu betreiben und/oder zu bedienen. Insbesondere für die Authentifizierung des Nutzers ist es bei erhöhten Sicherheitsstandards entscheidend, dass keine Fehler entstehen, indem bspw. unberechtigte Personen die Prüfkammer bedienen können. Gleiches gilt auch bei der Einstellung und Steuerung der Prüfkammer durch Eingabebefehle. Somit ist die 2-Faktor-Authentifizierung vorteilhaft, da diese eine erneute Bestätigung bei der Authentifizierung des Nutzers abfragt, und somit die Sicherheit und Korrektheit der Authentifizierung deutlich erhöht wird.

In einer weiteren vorteilhaften Ausführungsform der Erfindung ist das Verfahren ferner dadurch gekennzeichnet, dass der Schritt des Authentifizierens in einem ersten Teilschritt auf Basis der Authentifizierungsinformation erfolgt und in einem zweiten Teilschritt der Nutzer dazu veranlasst wird, eine weitere Authentifizierungsinformation mittels NFC, RFID, Bluetooth, einer Bestätigung auf einer Fernbedienung, einer Reaktion auf eine Push-Benachrichtigung auf einem Smartphone oder einer Smartwatch, durch Auslösen eines Näherungssensors innerhalb eines vordefinierten Zeitintervalls, durch Gesichtserkennung, durch Fingerabdruck-Erkennung und/oder durch Druckpunkt-Berührung zu erzeugen, um die aus der Authentifizierungsinformation ermittelte Identität des Nutzers auf Basis der weiteren Authentifizierungsinformation zu bestätigen.

Die vorstehend genannte Aufzählung möglicher Technologien ist dahingehend zu verstehen, dass entweder eine der genannten Technologien oder eine beliebige Kombination daraus zum Einsatz kommen kann.

In dieser Ausführungsform wird die weitere Authentifizierungsinformation dazu verwendet, die Authentizität des Nutzers zu bestätigen. Obgleich dies zu einem erhöhten zeitlichen Aufwand führt, ist diese gesicherte Authentifizierung in manchen Bereichen und Branchen gewünscht, und die damit einhergehenden Zeitverzögerungen einkalkuliert.

Insbesondere die kontaktlose Gesichtserkennung zur Erzeugung der weiteren Authentifizierungsinformation hat den Vorteil, dass hierdurch die zeitliche Verzögerung minimiert werden kann. So kann sich der Nutzer beispielsweise durch die Spracheingabe in dem ersten Teilschritt authentifizieren. Diese Authentifizierung wird dann durch die Gesichtserkennung auf deren Korrektheit überprüft, ggf. bestätigt und freigegeben.

Insbesondere, wenn zur Authentifizierung keine Spracherkennung zu Einsatz kommt, wie zum Beispiel bei der Nutzung von RFID oder NFC, ist diese 2-Faktor Authentifizierung vorteilhaft, da hierdurch die Sicherheit bei der Authentifizierung deutlich erhöht ist.

Die weitere Authentifizierungsinformation kann auch durch eine Bestätigung durch den Nutzer durch Drücken einer vorbestimmten Taste auf einer Fernbedienung, die der Nutzer vorzugsweise bei sich trägt, erfolgen. Auch ist es bevorzugt, wenn die weitere Authentifizierungsinformation in Reaktion auf eine Push-Benachrichtigung auf dem Smartphone oder der Smartwatch des Nutzers erzeugt wird. Dabei wird die Push-Benachrichtigung bei Annährung des Nutzers an die Prüfkammer, bspw. über Bluetooth, auf dem Smart-Gerät des Nutzers angezeigt, woraufhin der Nutzer die Benachrichtigung bestätigt. Nach erfolgter Bestätigung auf dem Smart-Gerät ist die Authentifizierung des Nutzers erfolgreich.

Die weitere Authentifizierungsinformation kann auch in Reaktion auf den Eingabebefehl des Nutzers von diesem als Bestätigung angefordert werden, wobei zur Erzeugung der weiteren Authentifizierungsinformation das oben Genannte gilt.

Die erfindungsgemäße Prüfkammer zur Temperierung von Prüfgut weist einen Prüfraum zur Aufnahme von Prüfgut, eine Tür, eine Temperiervorrichtung zur Temperierung des Prüfraums und eine Steuereinheit auf. Der Prüfraum ist gegenüber einer Umgebung temperaturgedämmt und mittels der Tür gegenüber der Umgebung verschließbar. Mittels der Temperiervorrichtung ist eine Temperatur in einem Temperaturbereich von - 20 °C bis +180 °C innerhalb des Prüfraums ausbildbar. Die Temperiervorrichtung weist eine Kühleinrichtung mit einem Kühlkreislauf mit einem Kältemittel, einem Wärmeübertrager, einem Verdichter, einem Kondensator und einem Expansionsorgan auf. Die erfindungsgemäße Prüfkammer ist dadurch gekennzeichnet, dass die Steuereinheit dazu ausgebildet ist, einen Eingabebefehl und einer Authentifizierungsinformation des Nutzers zu empfangen, den Nutzer auf Basis der Authentifizierungsinformation zu authentifizieren, und den Eingabebefehl auszuführen, wobei der Eingabebefehl und/oder die Authentifizierungsinformation kontaktlos erzeugt ist.

In einer weiteren vorteilhaften Ausführungsform der Erfindung ist die Prüfkammer ferner dadurch gekennzeichnet, dass die Steuereinheit ferner eine Anzeigevorrichtung aufweist, und die Steuereinheit dazu ausgebildet ist, einen Informationsgehalt des Eingabebefehls und/oder der Authentifizierungsinformation auf der Anzeigevorrichtung anzuzeigen.

Diese Ausführungsform hat den Vorteil, dass dem Nutzer der Prüfkammer nicht nur der von ihm eingegebene Eingabebefehl und/oder die Authentifizierungsinformation angezeigt wird, sondern damit die Überprüfung des Eingabebefehls und/oder die Authentifizierungsinformation auf deren Richtigkeit gewährleistet wird. So sieht der Nutzer oder eine Aufsichtsperson beispielsweise, welcher Eingabebefehls und/oder welche Authentifizierungsinformation gerade erzeugt wurde. Im Falle, dass ein nicht gewünschter Inhalt angezeigt wird, da bspw. ein falscher Eingabebefehl erzeugt wurde oder ein falscher Nutzer eine Authentifizierungsinformation erzeugt hat, ist somit ein Eingreifen möglich. Dies erhöht die Sicherheit bei der Bedienung der Prüfkammer.

In einer weiteren vorteilhaften Ausführungsform der Erfindung ist die Prüfkammer ferner dadurch gekennzeichnet, dass die Anzeigevorrichtung ferner dazu ausgebildet ist, den Informationsgehalt in textueller, akustischer oder haptischer Form anzuzeigen.

Diese Anzeigearten sind von den meisten Nutzern akzeptiert und gewünscht und machen eine schnelle Adaption des Nutzers bei der Implementierung der Technologie möglich. Hierdurch wird eine Anlernzeit verringert.

In einer weiteren vorteilhaften Ausführungsform der Erfindung ist die Prüfkammer ferner dadurch gekennzeichnet, dass die Steuereinheit ferner dazu ausgebildet ist, mittels einer drahtlosen Netzwerkverbindung einen Informationsgehalt des Eingabebefehls und/oder der Authentifizierungsinformation auf einem Mobiltelefon und/oder einer Smartwatch des Nutzers in textueller und/oder akustischer Form auszugeben.

Diese Ausführungsform ermöglicht dem Nutzer der Prüfkammer die direkte Überprüfung und gegebenenfalls Korrektur seines Eingabebefehls und/oder seiner Authentifizierungsinformation. Der Nutzer ist nicht mehr abhängig von einer Anzeigevorrichtung an der Prüfkammer, sondern kann den Informationsgehalt des Eingabebefehls und/oder der Authentifizierungsinformation direkt an seinem Endgerät überprüfen. Hierdurch wird die Flexibilität des Nutzers, insbesondere bei der Handhabung und parallelen Bedienung der Prüfkammer und/oder Authentifizierung weiter erhöht.

Weitere vorteilhafte Ausführungsformen einer erfindungsgemäßen Prüfkammer ergeben sich aus den vorangegangenen Merkmalsbeschreibungen der auf den Verfahrensanspruch 1 zurückbezogenen abhängigen Ansprüche.

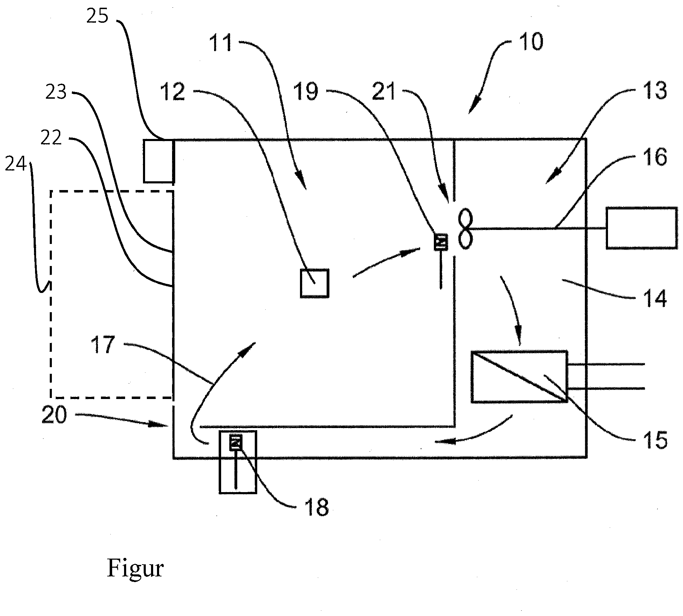

Nachfolgend wird eine bevorzugte Ausführungsform der Erfindung unter Bezugnahme auf die beigefügte Zeichnung näher erläutert.

Die **Figur** zeigt eine schematische Ansicht einer Prüfkammer 10 gemäß eines Ausführungsbeispiels der Erfindung.

Die Prüfkammer 10 weist einen Prüfraum 11 auf, in dem Prüfgut 12 angeordnet ist. In dem Prüfraum 11 ist ein Umluftkanal 13 angeordnet, der einen Luftbehandlungsraum 14 im Prüfraum 11 ausbildet. In dem Luftbehandlungsraum 14 ist ein Wärmeübertrager 15 zur Erwärmung oder Kühlung der den Umluftkanal 13 durchströmenden Luft angeordnet. Dabei saugt ein Lüfter 16 die im Prüfraum 11 befindliche Luft an und leitet sie im Umluftkanal 13 zu dem Wärmeübertrager 15. Das Prüfgut 12 wird so von einem hier mit Pfeilen 17 dargestellten Luftstrom umströmt und einem definierten Temperaturwechsel ausgesetzt. Die Prüfkammer 10 verfügt über eine Steuereinheit 18 mit einem Temperatursensor. Mittels des Temperatursensors wird eine Lufttemperatur einer Zuluft am Auslass 20 des Umluftkanals 13 gemessen.

Ein weiterer Temperatursensor 19 der Steuereinheit 18 ist an einem Einlass 21 des Umluftkanals 13 angeordnet, sodass hier eine Lufttemperatur einer Abluft innerhalb des Prüfraums 11 gemessen werden kann. Die Steuereinheit 18 kann somit eine Temperaturdifferenz der Lufttemperatur der Zuluft und der Lufttemperatur der Abluft innerhalb eines Prüfzeitabschnittes erfassen, speichern und/oder verarbeiten.

Die Prüfkammer 10 weist ferner eine Tür 22 auf. Die Tür 22 verschließt in einem geschlossenen Zustand 23, vorzugsweise gasdicht, eine Öffnung der Prüfkammer, durch die das Prüfgut 12 in den Prüfraum eingebracht werden kann. Die Tür ist im vorliegenden Beispiel über hier nicht näher dargestellte Drehscharniere an der Prüfkammer 10 drehbar befestigt. Die Tür kann sich von dem geschlossenen Zustand 23 in einen geöffneten Zustand 24 bewegen, der hier schematisch durch eine gestrichelte Linie angedeutet ist. Die Steuereinheit 18 ist dazu eingerichtet, einen Eingabebefehl eines Nutzers zu empfangen, und auf Basis des Eingabebefehls die Tür zu veranlassen, sich von dem geschlossenen Zustand 23 in den geöffneten Zustand 24 zu bewegen.

Zur Erzeugung des Eingabebefehls weist die Prüfkammer ferner ein Mikrofon 25 auf, das vorliegend beispielhaft an einer Außenseite der Prüfkammer 10 angebracht ist. Das Mikrofon 25 kann auch in der Prüfkammer integriert sein. Das Mikrofon 25 kann vorzugsweise unmittelbar durch die Steuereinheit 18 angesteuert werden und an die Steuereinheit, die empfangenen Signale weiterleiten. Somit ist es möglich, dass der Nutzer über das Mikrofon 25 über Spracheingabe den Eingabebefehl erzeugt. Dieser Eingabebefehl wird von dem Mikrofon 25 erfasst und von der Steuereinheit 18 verarbeitet und ausgeführt. Nach Erhalt des akustischen Eingabebefehls kann die Prüfkammer 10 beispielsweise als Empfangsbestätigung mit einem akustischen Signal und/oder einem optischen Signal, zum Beispiel durch das Aufblinken einer die LED-Leiste mit schnellen Farbwechseln, Morsezeichen, etc., reagieren. Alternativ oder ergänzend kann auch der Informationsgehalt des Eingabebefehls als Textinformation auf einer nicht gezeigten Anzeigevorrichtung angezeigt werden. Zusätzlich kann auch ein Lautsprecher an der Prüfkammer vorgesehen sein, wodurch es ermöglicht wird, akustische Signale abzusetzen, oder in einen Dialog mit dem Nutzer zu treten. Es ist möglich, dass der Nutzer die Umsetzung des erzeugten Eingabebefehls, bspw. in Antwort auf die Empfangsbestätigung, erneut bestätigen beziehungsweise verifizieren muss, um die eigentliche Ausführung des Eingabebefehl durch die Steuereinheit 18 zu veranlassen.

Alternativ oder ergänzend zu einer Implementierung eines Mikrofons an der Prüfkammer 10, kann auch das Mikrofon eines anderen Gerätes genutzt werden, um einen Eingabebefehl zu erzeugen. Beispielsweise ist es möglich, dass der Nutzer zur Sprachbefehlseingabe das Mikrofon seines Tablets, Mobiltelefons oder seiner SmartWatch via Netzwerkverbindung nutzt. Der so erzeugte Eingabebefehl wird über die Netzwerkverbindung drahtlos an die Steuereinheit 18 übermittelt und ausgeführt. Alternativ zu einer Netzwerkverbindung ist auch eine Verbindung zwischen der Steuereinheit 18 und dem Endgerät(en) des Nutzers mittels anderer Verbindungstechniken, wie zum Beispiel NFC oder Funk möglich.

## Patentansprüche

1. Verfahren zur Temperierung von Prüfgut in einer Prüfkammer (10), insbesondere Klimakammer, wobei eine Einstellung einer Lufttemperatur in einem Prüfraum (11) der Prüfkammer (10) mittels einer Steuereinheit (18) der Prüfkammer (10) gesteuert wird, wobei in dem Prüfraum (11) Prüfgut (12) angeordnet und entsprechend einem vorbestimmten Prüfablauf in einem Prüfzeitabschnitt ein Temperaturwechsel im Prüfraum (11) ausgebildet wird, wobei die Prüfkammer (10) mittels einer Tür (22) geöffnet und geschlossen wird,
wobei das Verfahren durch die folgenden Schritte gekennzeichnet ist:
- Empfangen eines Eingabebefehls und einer Authentifizierungsinformation eines Nutzers der Prüfkammer (10), wobei der Eingabebefehl und/oder die Authentifizierungsinformation kontaktlos erzeugt wird;
- Authentifizieren des Nutzers auf Basis der Authentifizierungsinformation; und
- Ausführen des Eingabebefehls.

2. Verfahren nach Anspruch 1,
dadurch g e k e n n z e ich n e t,
dass bei dem Schritt des Ausführens des Eingabebefehls die Tür (22) der Prüfkammer (10) geöffnet oder geschlossen wird.

3. Verfahren nach Anspruch 1 oder 2,
**dadurch gekennzeichnet,**
**dass** die Authentifizierungsinformation des Nutzers in dem Eingabebefehl umfasst ist, und der Nutzer auf Basis des Eingabebefehls authentifiziert wird.

4. Verfahren nach einem der Ansprüche 1 bis 3,
**dadurchgekennzeichnet,**
dass die Authentifizierungsinformation ein nutzerspezifisches Stimmfrequenzprofil aufweist, und das Authentifizieren des Nutzers mittels Spracherkennung des vorbekannten, nutzerspezifischen Stimmfrequenzprofils erfolgt.

5. Verfahren nach einem der Ansprüche 1 bis 4,
**dadurchgekennzeichnet,**
dass der Eingabebefehl eine Spracheingabe durch den Nutzer aufweist, und der Schritt des Ausführens des Eingabebefehls ferner ein Ermitteln eines Informationsgehaltes des Eingabebefehls mittels Spracherkennung aufweist.

6. Verfahren nach einem der Ansprüche 1 oder 3 bis 5,
**dadurchgekennzeichnet,**
dass der Eingabebefehl eine Spracheingabe durch den Nutzer aufweist, dass der Schritt des Ausführens des Eingabebefehls ferner ein Ermitteln eines Informationsgehaltes des Eingabebefehls mittels Spracherkennung aufweist, und dass das Verfahren ferner den Schritt aufweist:
- Einstellen der Lufttemperatur in dem Prüfraum (11) der Prüfkammer (10) auf eine von dem Nutzer vorbestimmte Temperatur auf Basis des ermittelten Informationsgehaltes des Eingabebefehls.

7. Verfahren nach Anspruch 5 oder 6,
**dadurchgekennzeichnet,**
dass das Verfahren ferner den Schritt aufweist:
- Veranlassen des Nutzers, den jeweils ermittelten Informationsgehalt des Eingabebefehls mittels eines Bestätigungsbefehls zu bestätigen.

8. Verfahren nach einem der Ansprüche 4 bis 7,
**dadurchgekennzeichnet,**
dass das Verfahren ferner den Schritt aufweist:
- Ausführen der Spracherkennung in einem Online-Betrieb und/oder einem Offline-Betrieb.

9. Verfahren nach einem der Ansprüche 4 bis 8,
**dadurchgekennzeichnet,**
dass das Verfahren ferner den Schritt aufweist:
- Herausfiltern von Störgeräuschen aus der Umgebung der Prüfkammer (xx), zum Zwecke der Spracherkennung mittels akustischer Filter.

10. Verfahren nach einem der Ansprüche 1 bis 9,
**dadurchgekennzeichnet,**
dass das Verfahren ferner die Schritte aufweist:
- Erstellen eines Protokolls über zumindest einen Teil der empfangenen Eingabebefehle und/oder Authentifizierungen, und
- Speichern des Protokolls für einen vorbestimmten Zeitraum.

11. Verfahren nach einem der Ansprüche 1 bis 3,
**dadurchgekennzeichnet,**
dass das Verfahren vor dem Schritt des Empfangens ferner den Schritt aufweist:
- Erzeugen des Eingabebefehls und/oder der Authentifizierungsinformation durch eine kontaktlose Interaktion des Nutzers mit einem Sensor.

12. Verfahren nach einem der Ansprüche 1 bis 11,
**dadurchgekennzeichnet,**
dass der Schritt des Authentifizierens als eine 2-Faktor-Authentifizierung durchgeführt wird.

13. Verfahren nach Anspruch 12,
**dadurchgekennzeichnet,**
dass der Schritt des Authentifizierens in einem ersten Teilschritt auf Basis der Authentifizierungsinformation erfolgt und in einem zweiten Teilschritt der Nutzer dazu veranlasst wird, eine weitere Authentifizierungsinformation mittels NFC, RFID, Bluetooth, einer Bestätigung auf einer Fernbedienung, einer Reaktion auf eine Push-Benachrichtigung auf einem Smartphone oder einer Smartwatch, durch Auslösen eines Näherungssensors innerhalb eines vordefinierten Zeitintervalls, durch Gesichtserkennung, durch Fingerabdruck-Erkennung und/oder durch Druckpunkt-Berührung zu erzeugen, um die aus der Authentifizierungsinformation ermittelte Identität des Nutzers auf Basis der weiteren Authentifizierungsinformation zu bestätigen.

14. Prüfkammer zur Temperierung von Prüfgut (12), die aufweist:
- einen Prüfraum (11) zur Aufnahme von Prüfgut (12);
- eine Tür (22);
- eine Temperiervorrichtung zur Temperierung des Prüfraums (11);
- eine Steuereinheit (18);
wobei der Prüfraum (11) gegenüber einer Umgebung temperaturgedämmt und mittels der Tür (22) gegenüber der Umgebung verschließbar ist;
wobei mittels der Temperiervorrichtung eine Temperatur in einem Temperaturbereich von - 20 °C bis +180 °C innerhalb des Prüfraums (11) ausbildbar ist,
wobei die Temperiervorrichtung eine Kühleinrichtung mit einem Kühlkreislauf mit einem Kältemittel, einem Wärmeübertrager (15), einem Verdichter, einem Kondensator und einem Expansionsorgan aufweist,
**dadurchgekennzeichnet,**
dass die Steuereinheit (18) dazu ausgebildet ist, einen Eingabebefehl und einer Authentifizierungsinformation des Nutzers zu empfangen, den Nutzer auf Basis der Authentifizierungsinformation zu authentifizieren, und den Eingabebefehl auszuführen, wobei der Eingabebefehl und/oder die Authentifizierungsinformation kontaktlos erzeugt ist.

15. Prüfkammer nach Anspruch 14,
**dadurchgekennzeichnet,**
dass die Steuereinheit (18) ferner eine Anzeigevorrichtung aufweist, und die Steuereinheit (18) dazu ausgebildet ist, einen Informationsgehalt des Eingabebefehls und/oder der Authentifizierungsinformation auf der Anzeigevorrichtung anzuzeigen.

16. Prüfkammer nach Anspruch 15,
**dadurchgekennzeichnet,**
dass die Anzeigevorrichtung ferner dazu ausgebildet ist, den Informationsgehalt in textueller, akustischer oder haptischer Form anzuzeigen.

17. Prüfkammer nach Anspruch 14,
**dadurchgekennzeichnet,**
dass die Steuereinheit (18) ferner dazu ausgebildet ist, mittels einer drahtlosen Netzwerkverbindung einen Informationsgehalt des Eingabebefehls und/oder der Authentifizierungsinformation auf einem Mobiltelefon und/oder einer Smartwatch des Nutzers in textueller und/oder akustischer Form auszugeben.
